# EUROPÄISCHE PATENTSCHRIFT

(11) **EP 1 464 683 B1**
(45) Veröffentlichungstag und Bekanntmachung des Hinweises auf die Patenterteilung: **20.09.2006**
(21) Anmeldenummer: 03007536.0
(22) Anmeldetag: 01.04.2003
(51) Int. Cl.: C09D 11/00

(54) **Ink-Jet Tinte**
Ink-Jet Ink
Encre pour jet d'encre

(43) Veröffentlichungstag der Anmeldung: 06.10.2004
(73) Patentinhaber: TETENAL AG & Co. KG., 22844 Norderstedt (DE)
(72) Erfinder: De Rossi, Umberto, Dr., 22844 Norderstedt (DE); Meirick, Jürgen, 22303 Hamburg (DE)
(74) Vertreter: Glawe, Delfs, Moll

(56) Entgegenhaltungen:
- EP-A- 1 251 154
- EP-A- 1 275 701
- WO-A-02/055618
- DE-A- 10 218 503
- PATENT ABSTRACTS OF JAPAN vol. 2000, no. 06, 22. September 2000 (2000-09-22) & JP 2000 085240 A (KONICA CORP), 28. März 2000 (2000-03-28)
- RICHARD THOMAS ET AL.: "Antioxidants: 3. Radical Scavengers, 3.4. Hydroxylamines" KIRK-OTHMER ENCYCLOPEDIA OF CHEMICAL TECHNOLOGY, ONLINE AUSGABE, 19. April 2002 (2002-04-19), XP002254615
- RICHARD THOMAS ET AL.: "Antioxidants: 4. Peroxide Decomposers, 4.3. Hydroxylamines" KIRK-OTHMER ENCYCLOPEDIA OF CHEMICAL TECHNOLOGY, ONLINE AUSGABE, 19. April 2002 (2002-04-19), XP002254616

## Beschreibung

Die Erfindung betrifft eine Ink-Jet Tinte. Ink-Jet Drucker werden heute umfangreich für Ausdrucke auf Papier und andere Substrate verwendet. Mehrfarb Ink-Jet Drucke auf geeignete Papiere erreichen fast Fotoqualität. Ein Nachteil von Ink-Jet Drucken mit Farbstofftinten ist die geringe Haltbarkeit der Ausdrucke, durch Lichteinwirkung und Umwelteinflüsse kommt es recht schnell zu einem Ausbleichen der Farben. Es sind Pigmenttinten bekannt, bei denen die Farbstoffträger Pigmente sind. Diese sind deutlich beständiger gegen Ausbleichen, haben allerdings den Nachteil, dass durch die makroskopische Größe der Pigmente die Druckqualität und das erzielbare Auflösungsvermögen des Ink-Jet Drucks geringer ist.

Es ist bereits vorgeschlagen worden (US-A-6,056,812), Ink-Jet Tinten mit UV-Absorbern, Radikalinhibitoren und Antioxidantien zu versetzen, um deren Beständigkeit gegen Umwelteinflüsse zu erhöhen.

JP-A-2000 085240 offenbart die Verwendung von Disulfoethylhydroxylamin (DSEHA) als Antioxidans in Ink-Jet Papier. In Kirk-Othmer Encyclopedia of Chemical Technology, Online Ausgabe (19.04.2002) "Antioxidants: 3. Radical Scavengers, 3.4. Hydroxylamines und 4. Peroxide Decomposers, 4.3. Hydroxylamines ist offenbar, dass Hydroxylamine antioxidative Eigenschaften aufweisen. EP-A-1 251 154 und DE-A-10 218 503 offenbaren Ink-Jet Tinten, welche Organohydroxylamin enthalten. EP-A-1 275 701 offenbart die Verwendung eines Organohydroxylamins in Farbstofflösungen oder - beschichtungen als Hautverhinderungsadditive.

Der Erfindung liegt die Aufgabe zugrunde, eine Ink-Jet Tinte zu schaffen, die eine gute Beständigkeit gegen Umwelteinflüsse aufweist.

Die Erfindung löst diese Aufgabe dadurch, dass die Ink-Jet Tinte ein Organohydroxylamin, nämlich Disulfoethylhydroxylamin, sowie Benzophenon enthält. Organohydroxylamine sind alle Stoffe, bei denen ein oder mehr Wasserstoffatome des Hydroxylamins durch organische Reste ersetzt sind, beispielsweise zweifach am Stickstoff substituierte Hydroxylamine, wie Disulfoethylhydroxylamin (DSEHA). Der Anteil des DSEHA an der Ink-Jet Tinte beträgt bevorzugt 0,5 bis 10 Gew.-%, weiter vorzugsweise 1 bis 8 Gew.-%, weiter vorzugsweise 2 bis 6 Gew.-%, weiter vorzugsweise 3 bis 5 Gew.-%. Etwa 4 Gew.-% sind besonders bevorzugt.

Die Ink-Jet Tinte der Erfindung kann eine Pigmenttinte sein, ist jedoch bevorzugt eine Farbstofftinte. Pigmentfarbstoffe sind alle in der Tinte im wesentlichen unlösliche und darin dispergierbare partikuläre Farbstoffe. Es können organische oder anorganische Farbstoffpigmente verwendet werden. Bei Farbstofftinten sind die Farbstoffe in dem Lösungsmittel der Tinte löslich. Solche löslichen Farbstoffe sind besonders empfindlich gegenüber Umwelteinflüssen. Die erfindungsgemäße Tinte kann wasserbasiert sein und enthält dann Wasser als hauptsächliches Lösungsmittel. Sie kann weitere Bestandteile sowie Formulierungshilfsmittel enthalten. Beispielsweise können Feuchthaltemittel wie Polyalkohole oder dergleichen enthalten sein. Übliche Feuchthaltemittel umfassen Glykole wie Diethylenglykol, Glycerin und Polyethylenglykol, N-Methyl-pyrrolidon, 2-Pyrrolidon, N-Methyl-2-Pyrrolidon, Isopropanol und dergleichen. Ferner kann die Tinte dem Fachmann geläufige weitere Hilfsmittel wie oberflächenaktive Stoffe, Biozide, Puffer, Komplexbildner oder Entschäumungsmittel enthalten. Ferner können zusätzlich UV-Absorber, Radikalinhibitoren oder weitere Antioxidantien in der Tinte enthalten sein. Radikalinhibitoren sind organische oder anorganische Stoffe, die die Entstehung von Molekülfragmenten mit einem oder mehreren ungepaarten Elektronen verzögern oder mit solchen Fragmenten abreagieren. Antioxidantien sind Verbindungen, die die Oxidation und damit den Abbau des Tintenfarbstoffs verhindern oder verzögern. UV-Absorber sind Substanzen, die Strahlungsenergie im UV-Bereich absorbieren. Geeignete Antioxidantien, UV-Absorber und Radikalinhibitoren sind beispielsweise in US-A-6,056,812 beschrieben.

Gegenstand der Erfindung ist ferner die Verwendung von DSEHA mit Benzophenon in Ink-Jet Tinten.

Die Erfindung wird nachfolgend anhand von Beispielen erläutert.

### Beispiel 1: Herstellung von Ink-Jet Tinten

Verschiedene Ink-Jet Tinten wurden nach der Rezeptur der Tabelle 1 angesetzt. Die verwendeten Farbstofflösungen waren die folgenden:
Gelb: Lösung Direct Yellow 132 (Duasyn 3 GF-SF)
Magenta: Lösung Direct Red 75 (Bayscript Magenta VP25005)

Des weiteren wurden die gleichen Tinten bergestellt, bei denen jedoch DSEHA jeweils weggelassen wurde. Alle in der Tabelle angegebenen Zahlen sind Gewichtsanteile.

**Tabelle 1**

| Tinte | Wasser | Farbstofflösung | Ethylenglykol | Propylenglykol | EtOH | 1,4-Hexandiol | 1,2-Hexandiol | Protectol HT | DSEHA | Tensid | Benzophenon |
|---|---|---|---|---|---|---|---|---|---|---|---|
| Gelb | 31,995 | 27 | 23 | - | 5 | 3 | 5 | 1 | 4 | 0,005 | - |
| Magenta | 48,995 | 10 | 17,25 | 5,75 | 5 | 3 | 5 | 1 | 4 | 0,005 | - |
| Magenta light | 55,095 | 3,9 | 11,5 | 11,5 | 5 | 3 | 5 | 1 | 4 | 0,005 | - |
| Gelb mit UV-Absorber | 30,995 | 27 | 23 | - | 5 | 3 | 5 | 1 | 3 | 0,005 | 2 |

### Beispiel 2: Ausbleichtests

Die gemäß Beispiel 1 angesetzten Tinten wurden über einen Ink-Jet Drucker auf Papier aufgebracht bzw. über einen Standard-Coater in verschiedenen Schichtdicken aufgetragen. Die Proben wurden in einem Suntester der Firma Atlas bei 750 W/m² bestrahlt. Testpapiere waren Tetenal Duoprint (mattes Papier) sowie Tetenal 264g Glossy (glänzendes Micropore-Papier). Nach 72 bzw. 144 Stunden wurde die optische Dichte sowie der ΔE-Wert (CIELAB) der Proben gemessen.

**Tabelle 2**

| Magenta auf Tetenal Duoprint (mattes Papier): | | | | |
|---|---|---|---|---|
| | 6µm ohne DSEHA | 6µm mit DSEHA | 12µm ohne DSEHA | 12µm mit DSEHA |
| OD nach 0h | 1,55 | 1,48 | 1,61 | 1,55 |
| OD nach 72h | 0,74 | 1,06 | 0,83 | 1,14 |
| ΔE (CIELAB) | 39,26 | 19,45 | 35,63 | 17,60 |

Man erkennt, dass unabhängig von der Schichtdicke der aufgetragenen Tinte die Lichtbeständigkeit der Tinte mit DSEHA gegenüber den Tinten ohne DSEHA deutlich erhöht ist.

**Tabelle 3**

| Magenta auf Tetenal 264g Glossy (glänzendes Papier Micropore) | | | | |
|---|---|---|---|---|
| | 6µm ohne DSEHA | 6µm mit DSEHA | 12µm ohne DSEHA | 12µm mit DSEHA |
| OD nach 0h | 1,59 | 1,23 | 1,96 | 1,64 |
| OD nach 72h | 0,45 | 0,42 | 0,58 | 0,7 |
| ΔE | 66,93 | 59,27 | 60,57 | 46,89 |

Auch bei der Verwendung von Micropore-Papier ist die technische Wirkung von DSEHA deutlich zu erkennen.

**Tabelle 4**

| Magenta light (ICC) Bestrahlungszeit 72h | | | | | | | | |
|---|---|---|---|---|---|---|---|---|
| | 6µm ohne DSEHA | 6µm mit DSEHA | 12µm ohne DSEHA | 12µm mit DSEHA | 6µm ohne DSEHA | 6µm mit DSEHA | 12µm ohne DSEHA | 12µm mit DSEHA |
| Papier | 264g | 264G | 264G | 264G | Duo-print | Duo-print | Duo-print | Duo-print |
| OD nach 0h | 0,55 | 0,49 | 0,66 | 0,6 | 0,93 | 0,92 | 1,03 | 1,01 |
| OD nach 72h | 0,21 | 0,22 | 0,25 | 0,25 | 0,39 | 0,56 | 0,46 | 0,66 |
| ΔE | 41,58 | 35,12 | 45,30 | 40,54 | 47,02 | 30,43 | 44,94 | 27,64 |

Die hier verwendete Tinte hat eine deutlich geringere Farbstoffkonzentration als die Magenta Tinte, die gemäß den Tabellen 2 und 3 geprüft wurde. Man erkennt unabhängig von der Schichtdicke und dem Papier, dass die Lichtbeständigkeit deutlich verbessert ist.

**Tabelle 5**

| Tinte gelb, Bestrahlungszeit 72h | | | | |
|---|---|---|---|---|
| | 12µm ohne DSEHA | 12µm mit DSEHA | 12µm ohne DSEHA | 12µm mit DSEHA |
| Papier | 264g | 264g | Duoprint | Duoprint |
| OD nach 0h | 1,98 | 1,95 | 1,54 | 1,54 |
| OD nach 72h | 1,73 | 1,76 | 1,12 | 1,24 |
| ΔE | 10,55 | 8,50 | 22,99 | 15,72 |

Eine deutliche Verbesserung der Stabilität ist auch für die gelbe Tinte zu erkennen.

**Tabelle 6**

| Erfindungsgemäße Tinte gelb mit UV-Absorber | | |
|---|---|---|
| | ohne DSEHA | mit DSEHA |
| Papier | 264g | 264g |
| OD nach 0h | 1,93 | 1,9 |
| OD nach 144h | 1,45 | 1,65 |
| ΔE | 25,357 | 17,443 |

**Tabelle 7**

| | ohne DSEHA | mit DSEHA | ohne DSEHA | mit DSEHA |
|---|---|---|---|---|
| Papier | Duoprint | Duoprint | 264g | 264g |
| OD nach 0h | 1,5 | 1,56 | 1,89 | 1,75 |
| OD nach 144h | 0,45 | 0,61 | 0,59 | 0,83 |
| ΔE | 60,76 | 51,81 | 58,74 | 43,31 |

Bei den Versuchen der Tabelle 6 und 7 wurden die Tinten jeweils in einer Schichtdicke von 12µm aufgetragen. Man erkennt hier die nochmals erhöhte Stabilität erfindungsgemäßer Tinten bei der Kombination mit Benzophenon als UV-Absorber. Bei diesen Versuchen wurde daher die Bestrahlungszeit auf 144 Stunden erhöht.

## Patentansprüche

1. Ink-Jet Tinte, **dadurch gekennzeichnet, dass** sie Disulfoethylhydroxylamin (DSEHA) und als UV-Absorber Benzophenon enthält.

2. Ink-Jet Tinte nach Anspruch 1, **dadurch gekennzeichnet, dass** es eine Farbstofftinte ist.

3. Ink-Jet Tinte nach Anspruch 1 oder 2, **dadurch gekennzeichnet, dass** sie 0,5 bis 10 Gew.-%, vorzugsweise 1 bis 8 Gew.-%, weiter vorzugsweise 2 bis 6 Gew.-%, weiter vorzugsweise 3-5 Gew.-% Disulfoethylhydroxylamin (DSEHA) enthält.

4. Ink-Jet Tinte nach einem der Ansprüche 1 bis 3, **dadurch gekennzeichnet, dass** sie zusätzliche UV-Absorber und/oder Radikalinhibitoren enthält.

5. Verwendung von Disulfoethylhydroxylamin (DSEHA) mit Benzophenon in Ink-Jet Tinten.

## Claims

1. Inkjet ink, **characterised in that** it contains disulphoethyl hydroxylamine (DSEHA) and, as UV absorber, benzophenone.

2. Inkjet ink according to Claim 1, **characterised in that** it is a dye ink.

3. Inkjet ink according to Claim 1 or 2, **characterised in that** it contains 0.5 to 10 wt.%, preferably 1 to 8 wt.%, more preferably 2 to 6 wt.%, more preferably 3 - 5 wt.% of disulphoethyl hydroxylamine (DSEHA).

4. Inkjet ink according to any one of Claims 1 to 3, **characterised in that** it additionally contains UV absorbers and/or radical inhibitors.

5. Use of disulphoethyl hydroxylamine (DSEHA) with benzophenone in inkjet inks.

## Revendications

1. Encre pour jet d'encre, **caractérisée en ce qu'**elle contient de la disulfoéthylhydroxylamine (DSEHA) et, comme absorbeur d'UV, de la benzophénone.

2. Encre pour jet d'encre selon la revendication 1, **caractérisée en ce qu'**elle est une encre à colorant.

3. Encre pour jet d'encre selon la revendication 1 ou 2, **caractérisée en ce qu'**elle contient 0,5 à 10 % en poids, de préférence 1 à 8 % en poids, encore plus préférentiellement 2 à 6 % en poids, de manière plus préférée de 3 à 5 % en poids de disulfoéthylhydroxylamine (DSEHA).

4. Encre pour jet d'encre selon l'une des revendications 1 à 3, **caractérisée en ce qu'**elle contient des absorbeurs d'UV et/ou des inhibiteurs de radicaux supplémentaires.

5. Utilisation de la disulfoéthylhydroxylamine (DSEHA) avec de la benzophénone dans des encres pour jet d'encre.
